# DEMANDE DE BREVET EUROPEEN

(11) **EP 2 160 063 A1**
(43) Date de publication de la demande: **03.03.2010**
(21) Numéro de dépôt: 08305511.1
(22) Date de dépôt: 29.08.2008
(51) Int. Cl.: H04W 52/36

(54) **Maîtrise de la fiabilité et/ou du périmètre d'une connexion radiofréquence**

(71) Demandeur: GEMPLUS, 13420 Gémenos (FR)
(72) Inventeur: Capomaggio, Grégory, 13360, ROQUEVAIRE (FR)

(57) **Abrégé**

L'invention concerne un dispositif de communication radiofréquence (2-3), ledit dispositif comportant des moyens de gestion (6A) d'une liaison radiofréquence avec un dispositif distant, lesdits moyens de gestion étant aptes à déterminer un dépassement d'un niveau maximum ou minimum de puissance d'émission;

Le dispositif se distingue en ce que les moyens de gestion (6A) sont aptes à déclencher une opération de contrôle quand ce niveau est atteint ou dépassé ou en voie de l'être.

L'invention concerne également un système et une utilisation du système à un contrôle de distance D max.

## Description

L'invention concerne un dispositif électronique de communication radiofréquence comportant de moyens de gestion aptes à déterminer un dépassement d'un niveau maximum ou minimum de puissance d'émission.

De plus, cette invention s'applique à tout dispositif dont la distance de communication radiofréquence est volontairement réduite afin de garantir le respect de la vie privée de l'utilisateur ou de limiter les interférences avec d'autres systèmes utilisant la même bande de radiofréquences.

En particulier, l'invention s'applique au contrôle d'accès à une unité de traitement de données via un objet portable d'authentification tel qu'un badge personnel dans un périmètre limité (à quelques mètres par exemple dans la plupart des cas).

Elle vise les dispositifs comprenant un contrôleur de type "Bluetooth" et s'applique, dans ce cas, en particulier à la gestion d'un mécanisme de gestion de puissance par le contrôleur "Bluetooth". D'autres modes ou standards de communication sont aussi visés.

De tels dispositifs disposent généralement d'une fonction de négociation de la puissance d'émission, décrite en détail ultérieurement. Concernant les contrôleurs physiques de type "Bluetooth", dans l'état de l'art, on implémente un protocole de paramétrage (ou protocole de gestion de liaison) nommé "LMP" (acronyme anglo-saxon de Link Management Protocol) qui permet, outre la création et gestion de nouvelles connexions logiques, d'adapter la puissance d'émission d'une connexion physique. Ce mécanisme d'adaptation est connu sous le terme de « power control » (contrôle de puissance) dans la spécification "Bluetooth". Le protocole LMP fournit entre autres le jeu de commandes suivant :
- "LMP_incr_power_req" et "LMP_decr_power_req": Le contrôleur Bluetooth demande respectivement au dispositif distant d'augmenter et de diminuer sa puissance d'émission.
- "LMP_max_power" et "LMP_min_power"; Le contrôleur Bluetooth ayant reçu une requête ci-dessus informe le dispositif distant que sa puissance d'émission est respectivement à son maximal et à son minimal, toute autre requête d'ajustement ou d'adaptation depuis le dispositif distant étant rejetée.
- LMP_accepted: Le contrôleur Bluetooth informe le dispositif distant que la requête précédente a été acceptée et correctement exécutée.

Une négociation de puissance entre deux dispositifs radiofréquences "Bluetooth" arrive à saturation lorsqu'un des dispositifs transmet une trame de notification "LMP_max_power" ou "LMP_min_power". Toute autre requête d'augmentation ou de diminution de la puissance d'émission (suivant la trame de notification précédemment envoyée) sera automatiquement rejetée par le dispositif "Bluetooth", tandis que la connexion radiofréquence entre les deux dispositifs peut rester maintenue.

Ceci a pour conséquence d'entrainer une détérioration de la communication radiofréquence entre les deux dispositifs (erreurs de réception, augmentation de la durée des échanges, désynchronisations / déconnexions aléatoires) et un élargissement conséquent du périmètre de communication établi (ex. Pour un périmètre établi à un mètre de distance, la liaison radiofréquence sera susceptible d'être maintenue de manière aléatoire sur plusieurs dizaines de mètres jusqu'à déconnexion).

La distance (ou périmètre) établi entre deux dispositifs radiofréquence A & B définit la distance maximale où le dispositif A fournit une puissance d'émission nominale (maximale) et le dispositif B détecte un niveau de réception égale à son niveau de sensibilité.

D'autre part, l'élargissement du périmètre d'authentification avec le système informatique distant, peut faire l'objet d'utilisations frauduleuses des ressources informatiques sensibles par un tiers, lorsque l'utilisateur est en dehors du périmètre établi (i.e. poste de travail hors de porté de l'utilisateur).

Ces modes de fonctionnement ne sont pas acceptables notamment pour certaines applications, telles que le badge d'authentification communicant, décrit ultérieurement, où il est préférable pour des raisons notamment de sécurité, de « refuser » d'échanger toutes informations sensibles entre les deux dispositifs si la communication n'est pas optimale et confinée à un périmètre volontairement limité.

L'invention a pour objectif de résoudre les inconvénients précités.

La présente invention propose dans son principe un paramétrage du dispositif radiofréquence, plus exactement du mécanisme de gestion ou négociation de la puissance d'émission, permettant d'opérer une opération quelconque, en particulier de déconnecter la liaison radiofréquence entre deux dispositifs, lorsque l'un des deux n'est plus en mesure d'adapter sa puissance d'émission (suite à un niveau minimal ou maximal atteint).

A cet effet, l'invention a pour objet un dispositif de communication radiofréquence, ledit dispositif comportant des moyens de gestion d'une liaison radiofréquence avec un dispositif distant, lesdits moyens de gestion étant aptes à déterminer un niveau de saturation de puissance d'émission;

II se distingue en ce que les moyens de gestion sont aptes à déclencher une opération quand ce niveau est atteint ou dépassé ou en voie de l'être.

Selon d'autres caractéristiques, l'opération est déclenchée à la réception ou émission de requêtes d'adaptation de puissance du dispositif distant; Lesdites requêtes tendant à atteindre ou faire dépasser un maximum ou minimum de puissance; L'opération peut également être déclenchée en réponse à la réception ou émission de messages de saturation de la puissance d'émission.

Dans des applications préférées, l'opération est une déconnexion ou l'émission d'un signal de déconnexion de la communication ou une alerte à destination d'un utilisateur, qu'elle soit visuelle, sonore...ou déclenchée notamment dans une interface homme / machine telle qu'un afficheur, un haut parleur présent notamment au niveau du moyen hôte du contrôleur "bluetooth". Dans ce cas, le déclenchement s'effectue en dehors des contrôleurs notamment au niveau du moyen hôte.

L'opération notamment de contrôle est directement déclenchée par les moyens de gestion de communication radiofréquence. Dans tous les cas, selon un aspect préféré de l'invention, une notification sera émise vers les couches hautes des dispositifs.

En outre, ces opérations sont suivies d'effet contrairement à l'art antérieur.

L'invention permet ainsi à l'utilisateur du dispositif de maîtriser la distance de communication avec un dispositif distant par le biais d'un contrôle du niveau de puissance des trames radiofréquences reçues et des instants de saturation de puissance de manière à assurer un fonctionnement optimal du dispositif dans tous les cas.

De cette manière l'invention permet de maitriser le plus tôt possible un dépassement de puissance ou un dépassement correspondant à une zone de contrôle dans lequel s'effectue une communication fiable à un niveau de puissance contrôlé.

Selon un mode préféré de réalisation, on prévoit deux modes de fonctionnement sélectionnables :
- un premier mode de fonctionnement normal (conformément au standard),
- un second mode de fonctionnement dans lequel ladite opération automatique est effectuée quand ce niveau est atteint ou dépassé ou en voie de l'être. En cas de dépassement, les trames de notification de saturation sont remplacées, par exemple, par des trames d'acceptation, permettant ainsi de recevoir une requête tendant à faire dépasser le niveau maximum ou minimum.

Grâce à ces dispositions, l'invention peut rester compatible avec le standard selon un des deux modes. En outre, il n'est pas nécessaire de modifier les deux dispositifs pour utiliser l'invention. Par exemple, dans le cas d'une application de badge d'authentification, seul le badge peut être conçu à cet effet avec les fonctionnalités de l'invention, l'autre dispositif étant compatible au standard "Bluetooth" notamment.

L'invention a également pour objet un système de communication radiofréquence entre un dispositif local et distant, ledit système comportant au moins un dispositif local conforme à celui ci-dessus en communication avec un dispositif distant, ledit dispositif distant étant apte au moins à effectuer des requêtes de modification de la puissance de trames émises au dispositif local et/ou à recevoir des trames de notification de saturation d'adaptation de puissance.

Selon une application préférée, le dispositif local est un objet portable d'authentification et le dispositif distant est un système informatique, l'accès au moins partiel au système informatique et/ou tout ou partie de son fonctionnement étant refusé lorsque l'objet portable ou le système informatique a déterminé un dépassement d'un niveau maximum ou minimum de puissance

L'invention a également pour objet une utilisation du système au contrôle d'une distance dans laquelle on établit une communication entre deux dispositifs local et distant, ladite distance correspondant au niveau maximum et/ou minimum de puissance; II se distingue en ce que l'on déduit que l'une au moins des distances (Dmax / Dmin) est atteinte ou dépassée ou en voie de l'être quand un niveau maximum ou minimum de puissance atteint ou dépassé ou en voie de l'être est déterminé et signalé par un des dispositifs.

D'autres particularités et avantages de l'invention apparaîtront à la lecture de la description, faite à titre d'exemple non limitatif et en regard des dessins annexés sur lesquels :
- La figure 1 illustre schématiquement un système informatique doté d'un dispositif de badge communicant conforme à l'invention;
- La figure 2 illustre un schéma d'une architecture physique d'un dispositif "Bluetooth";
- La figure 3 un organigramme fonctionnel montrant des étapes d'un procédé mis en oeuvre par de l'invention;
- La figure 4 illustre une application de l'invention au dispositif de badge d'authentification communicant.

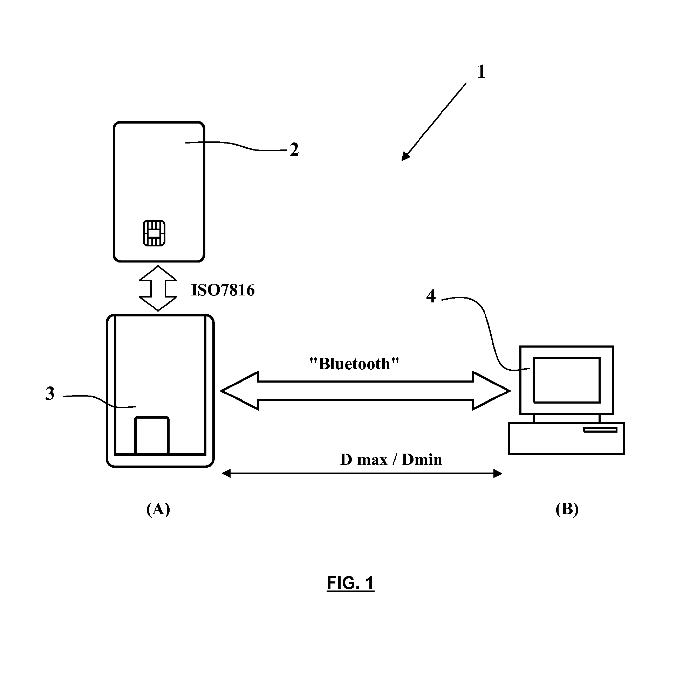

A la figure 1, un système de communication radiofréquence 1 entre un dispositif local (2-3) et distant 4 comprend un dispositif de badge 2 d'authentification communicant pris comme exemple afin de démontrer la nature de l'invention.

Néanmoins, tout autre dispositif ou objet portable exploitant un mécanisme de négociation de la puissance d'émission, sera susceptible d'implémenter l'invention décrite ci-après. Le dispositif distant selon l'invention, est apte au moins à effectuer, au titre de la fonction de négociation de la puissance d'émission, des requêtes de modification de la puissance de trames émises au dispositif local.

Un dispositif de badge d'authentification communicant permet à un utilisateur de s'authentifier à un système informatique 4 distant (ordinateur personnel, téléphone portable, PDA, toute unité de traitement de données etc.) dans un périmètre limité.

Ce système d'authentification comporte un dispositif mobile, porté par l'utilisateur, et constitué d'une carte à puce (2) contenant, de manière sécurisée, les données, les clés ainsi que les secrets de l'utilisateur et d'un porte badge électronique (3) disposant d'une interface pour carte à puce ISO7816 et d'une interface radiofréquence de type "Bluetooth". Cet équipement permettant de relayer les données entre la carte à puce vers/depuis le système informatique distant 4.

Dans cet exemple, on admet que le système informatique distant 4 est, lui aussi, équipé d'une interface radiofréquence Bluetooth..

La distance de communication entre les deux équipements est ajustée en paramétrant la puissance nominale (maximale) d'émission du badge d'authentification 2, en fonction de la sensibilité de réception de l'interface radiofréquence du système informatique distant 4.

La séquence d'authentification consiste en un échange d'information entre le système informatique distant et la carte à puce. Le contenu de cet échange étant en dehors du cadre de la présente invention. La séquence d'authentification de l'utilisateur est déclenchée automatiquement par le système informatique distant lorsque le dispositif mobile entre dans le périmètre de communication établi.

Si cette authentification s'effectue correctement, la session logicielle de l'utilisateur est chargée et/ou certaines données informatiques sensibles deviennent accessibles à l'utilisateur.

Dans l'application badge, les dispositifs, implémentant l'invention décrite ci-dessus, sont réglés de manière à déclencher une opération de déconnexion pour une distance maximale Dmax configurable entre 1 et 10m par exemple ; alors que ce même dispositif sera susceptible de conserver une communication radiofréquence jusqu'à 100m sans déconnexion, dans le cadre d'une implémentation standard.

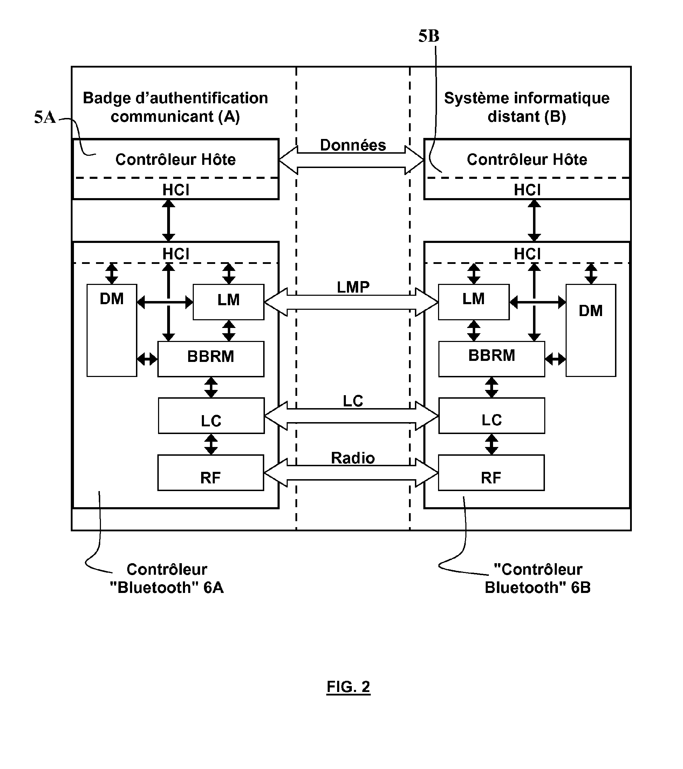

A la figure 2, une architecture physique d'un dispositif "Bluetooth" comprend un contrôleur hôte 5A chargé de paramétrer un contrôleur "Bluetooth" 6A et de transmettre et gérer les données vers/depuis le contrôleur "Bluetooth"; le contrôleur "Bluetooth" 6A est chargé de la gestion de la liaison radiofréquence avec le dispositif distant 4 qui comporte des moyens correspondants: contrôleur hôte 5B en relation avec un contrôleur "Bluetooth" 6B d'un système informatique ou toute unité de traitement de données.

La communication entre les contrôleurs hôtes et les contrôleurs "Bluetooth" s'effectue au travers d'un protocole de communication de type HCl (acronyme anglo-saxon de Host Controller Interface) établi par la spécification Bluetooth.

Le protocole LMP décrit précédemment est mis en oeuvre dans ce système; En outre, le système comprend notamment dans le contrôleur "Bluetooth" un mécanisme de détection du niveau de puissance des trames radiofréquence reçues, un mécanisme d'adaptation (augmentation / diminution) de la puissance des trames radiofréquence émises, un protocole de communication permettant au dispositif local de contrôler la puissance d'émission du dispositif distant.

Les contrôleurs 6A et 6B des dispositifs sont constitués, à titre d'exemple, de différents éléments physiques (DM, LM, BBRM, LC, RF) permettant de gérer les différentes couches de communication d'une interface Bluetooth comme la synchronisation de trames radiofréquence ou la gestion de connexions logiques.

Ces éléments connus et non développés davantage, sont à titre d'exemple, un gestionnaire DM de contrôleur, un gestionnaire LM de connexion, un gestionnaire BBRM des ressources de bande de base, un contrôleur LC de liaison et une interface radio RF. Les dispositifs sont aptes à échanger de manière connue des données, des requêtes LMP, notamment des données de synchronisation LC, des commandes et des trames radiofréquences "Radio" concernant respectivement différents niveaux et/ou composants de l'architecture.

Selon le protocole mis en place, le dispositif local 2, 3 est capable de notifier le dispositif distant 4 lorsque les limites d'adaptation sont atteintes selon qu'un mode de configuration selon l'invention est ou non activé comme indiqué ultérieurement

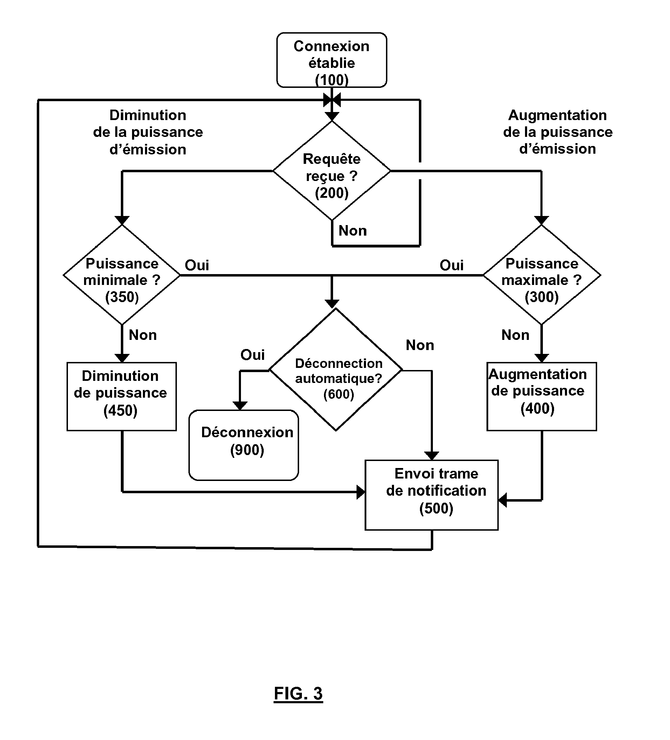

L'organigramme de la figure 3 décrit le fonctionnement d'un dispositif radiofréquence implémentant l'invention selon un mode de mise en oeuvre:
- A l'étape 100, une connexion radiofréquence est établie entre un dispositif local A et un dispositif distant B.
- A l'étape 200, le dispositif local se met en attente de trame de négociation de puissance depuis le dispositif distant;
- A l'étape 300, lorsque le dispositif distant requiert une augmentation de la puissance d'émission (i.e. le dispositif local s'éloigne du dispositif distant), le dispositif local vérifie, de manière connue en technologie "Bluetooth", si son niveau de puissance est saturé (puissance nominale).
- Dans le cas contraire, il incrémente la valeur de puissance d'émission (étape 400) et envoie une trame de notification au dispositif distant (étape 500).
- Si le niveau de puissance est saturé, selon le mode de mise en oeuvre de l'invention, le dispositif local A vérifie (étape 600) si une déconnection automatique a été activée par le contrôleur hôte 5A, et envoie une trame de notification au dispositif distant (étape 500), (le cas échéant facultativement).
- Si la déconnection automatique est activée, le dispositif local déconnecte la liaison radiofréquence (étape 700) avec le dispositif distant.

L'information ou commande de déconnexion est remontée en dehors du contrôleur Bluetooth au niveau du contrôleur hôte pour une exploitation conforme à l'invention notamment de contrôle.

L'opération pourrait toutefois être quelconque et distincte notamment d'une notification de saturation transmise entre contrôleurs et restant au niveau des contrôleurs.

Dans une variante de mise en oeuvre, on utilise l'événement de réception d'une trame de notification par dispositif distant (étape 500), pour déclencher des opérations du même type que celles décrites précédemment, telles que la déconnexion par le dispositif distant lui-même.

D'une manière générale, la détermination qu'un niveau de saturation et atteint ou en voie d'être dépassé ou dépassé peut s'effectuer par un dispositif ou par l'autre à différent instants, notamment, à la réception ou émission d'une requête d'adaptation, le dispositif pouvant savoir à que niveau de puissance d'émission il se trouve ou se trouve l'autre. La détermination peut aussi s'effectuer par une réception d'une notification comportant une information relative à ce niveau de puissance (information de dépassement, atteinte....).

L'invention prévoit un fonctionnement similaire lorsque le dispositif distant requiert une diminution de la puissance d'émission (i.e. Le dispositif local s'approche du dispositif distant) (voir branche diminution de la puissance).

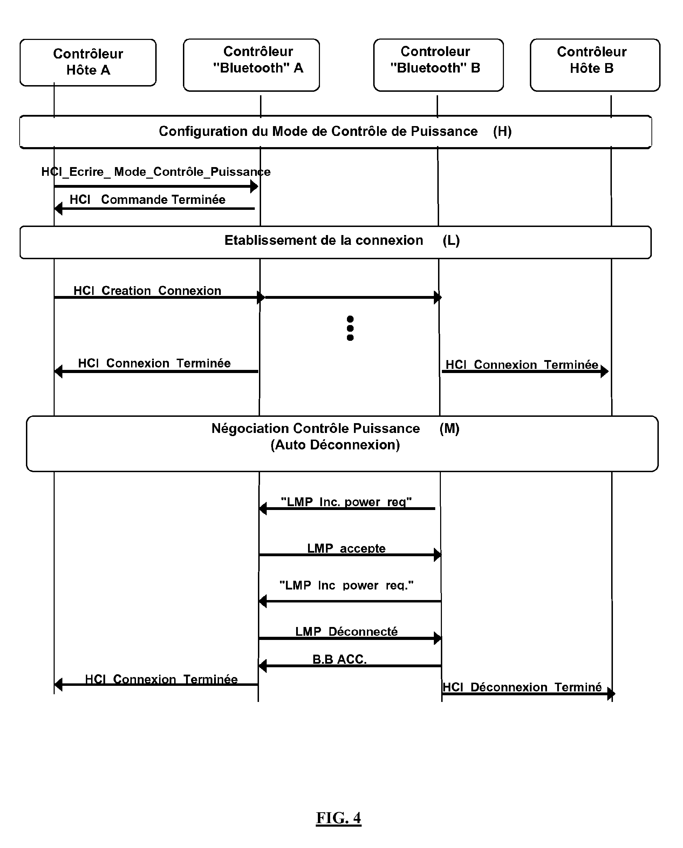

Une implémentation de l'invention sur le dispositif de badge d'authentification communicant sera décrite ci-après en relation avec la figure 4.

On admet que le contrôleur hôte 5A, du dispositif de badge d'authentification communicant A, puisse paramétrer les moyens de gestion de la puissance du dispositif ou autrement dit le mécanisme de gestion de la puissance dit « power control » en terminologie anglo-saxonne, du contrôleur "Bluetooth" (6A) afin d'activer ou non la déconnection automatique. Ce paramétrage s'effectuera au travers de nouvelles commandes HCl apportées par l'invention et qui permettront d'activer/désactiver ou de connaitre le statut de la nouvelle fonctionnalité.

Un jeu de commandes/paramètres ci-dessous est donné à titre d'exemple:
- "HCl_Ecriture_Mode_Contrôle_Puissance ": commande HCl d'écriture configurant les moyens de gestion de puissance ou mécanisme de contrôle de puissance du contrôleur "Bluetooth".

| Commande | Paramètres de Commande | Paramètres de retour |
|---|---|---|
| HCl_Ecriture_Mode_Contrôle_Puissance | Power_Control_Mode | Status |

- "HCI_Lecture_Mode_Contrôle_Puissance": commande HCl lisant et retournant le mode de configuration courant des moyens de gestion de puissance ou mécanisme de contrôle de puissance du contrôleur "Bluetooth".

| Commande | Paramètres de Commande | Paramètres de Retour |
|---|---|---|
| HCl_lecture_Mode_Contrôle_Puissance | | - Statut - Mode contrôle de puissance |

"Mode_Contrôle_Puissance: paramètre définissant le comportement des moyens de gestion de puissance ou du mécanisme de contrôle de puissance du contrôleur "Bluetooth".

| Valeur | Description du paramètre |
|---|---|
| 0x00 | Déconnexion Automatique Désactivée |
| 0x01 | Déconnexion Automatique activée. Achève la connexion en cours au lieu de transmettre les requêtes notifiant la saturation (ou refus d'adaptation) "LMP_min_power" ou "LMP_max_power". |
| 0x02-0xFF | Réservé |

Le graphique D représente une séquence d'échange de trames entre les différents éléments constituant un système de badge d'authentification communicant implémentant l'invention.

Dans une première phase (H), on procède au moins à une sélection du mode de fonctionnement du dispositif A par lequel la déconnexion automatique est activée et/ou le cas échéant à l'écriture des niveaux de puissance mini ou maxi au moins dans le dispositif local A, les niveaux correspondant à des distances de communication présentant de bonnes conditions de fiabilité.

Dans la phase (L), une communication "Bluetooth" est établie de manière classique selon la norme "Bluetooth" et à la phase (M), une négociation du contrôle de la puissance est entrepris conformément à un mode de l'invention dans lequel une opération est déclenchée automatiquement et de manière fiable, en l'occurrence une déconnexion comme indiquée ci-après.

Au cours d'une première requête, le badge reçoit une requête d'augmentation de la puissance de la part du contrôleur 6B du dispositif distant 4;

Le contrôleur 6A du dispositif local 2,3 accepte et notifie son acceptation (LMP_accepte); le niveau de puissance du dispositif A est à ce moment à son maximum de puissance;

Ensuite, suite à un éloignement du dispositif B, le badge reçoit à nouveau une requête d'augmentation de la puissance et en vertu de l'invention, en réponse, le dispositif A déclenche uniquement une opération de déconnection dans la mesure où suite à la requête, le dispositif de l'invention ayant vérifié que la saturation de puissance était effective et qu'il se trouve en mode déconnexion automatique activé (la distance maxi étant dépassée) ne peut que déclencher la déconnexion. II envoie également facultativement une notification "LMP_deconnecte" au contrôleur B.

Dans cet exemple, il n'y a donc pas de notification de la part du dispositif A que la puissance limite est atteinte contrairement à l'art antérieur.

L'invention permet donc de garantir ou maîtriser au plus tôt et de manière fiable une opération quelconque notamment de déconnexion dès la réception notamment d'une requête "LMP_Incr_power_req" ou LMP_decr_power_req" tendant à faire dépasser une limite maxi ou mini de puissance par le dispositif A.

L'invention prévoit également une utilisation du système au contrôle d'une distance dans lequel on établit une communication entre deux dispositifs local A et distant B, ladite distance correspondant au niveau maximum et/ou minimum de puissance (D max / Dmin). On déduit que les distances Dmax / Dmin. (fig. 1) sont dépassées lorsqu'une opération externe est déclenchée en réponse à une requête d'ajustement ou d'adaptation (LMP_inc_power_req LMP_decr_power_req) de puissance tendant à faire dépasser ledit niveau maximum et/ou minimum. L'opération externe peut être une alarme transmise du contrôleur A ou B au dispositif hôte A ou B notamment à destination d'un utilisateur de l'un des dispositifs.

Par exemple, grâce à l'invention, on peut surveiller de manière plus efficace et plus rapide une aire de jeu d'enfant portant un dispositif portable A en communication avec un dispositif B porté par un adulte.

L'utilisation peut comporter une étape préalable de configuration desdits moyens de gestion avec des niveaux de puissance correspondant à au moins une distance à contrôler qui peut aller de 1 m à 100 m par exemple.

L'invention permet de contrôler également un intervalle une zone, par exemple, situé entre 3 et 15 m correspondant à des valeurs de Dmin et Dmax. Le contrôle peut aussi concerner l'une ou les deux distances Dmin et Dmax.

## Revendications

1. Dispositif de communication radiofréquence (A, 2-3), ledit dispositif comportant des moyens de gestion (6A) d'une liaison radiofréquence avec un dispositif distant (B), lesdits moyens de gestion étant aptes à déterminer un niveau de saturation de puissance d'émission, **caractérisé en ce que** les moyens de gestion (6A) sont aptes à déclencher une opération de contrôle quand ce niveau est atteint ou dépassé ou en voie de l'être.

2. Dispositif de communication radiofréquence selon la revendication 1, **caractérisé en ce que** ladite opération est déclenchée à la réception de requêtes d'adaptation de puissance provenant du dispositif distant tendant à faire dépasser ou atteindre un maximum ou minimum de puissance.

3. Dispositif de communication radiofréquence selon la revendication 1, **caractérisé en ce que** ladite opération est déclenchée suite à la réception ou émission de messages de saturation ou tendant à faire dépasser un maximum ou minimum de puissance.

4. Dispositif selon l'une des revendications précédentes, **caractérisé en ce que** l'opération est une déconnexion ou un signal de déconnexion.

5. Dispositif selon l'une des revendications 1 à 3, **caractérisé en ce que** l'opération est une alerte à destination d'un utilisateur.

6. Dispositif selon la revendication précédente, **caractérisé en ce qu'**il comprend des moyens de configuration (5A, 6A) aptes à paramétrer des niveaux de puissance correspondant à des distances limites de communication.

7. Dispositif selon la revendication 1, **caractérisé en ce qu'**il comprend deux modes de fonctionnement sélectionnables :
- un premier mode de fonctionnement standard,
- un second mode de fonctionnement dans lequel ladite opération automatique est effectuée quand ce niveau est atteint ou dépassé ou en voie de l'être.
- un second mode de fonctionnement dans lequel ladite opération automatique est effectuée quand ce niveau est atteint ou dépassé

8. Dispositif selon la revendication précédente, **caractérisé en ce qu'**il constitue un objet portable d'identification et/ou d'accès à un système informatique.

9. Système de communication radiofréquence (1) entre un dispositif local (A) et distant (B), ledit système comportant :
- au moins un dispositif local conforme à la revendication 1 à 8 en communication avec un dispositif distant (B), ledit dispositif distant étant apte au moins à effectuer des requêtes de modification de la puissance de trames émises au dispositif local et/ou à recevoir des notifications de saturation d'adaptation de puissance.

10. Système de communication radiofréquence selon la revendication précédente, **caractérisé en ce que** le dispositif local (A) est un objet portable d'authentification (2, 3) et le dispositif distant (B) est un système informatique (4), l'accès au moins partiel au système informatique et/ou tout ou partie de son fonctionnement étant refusé lorsque l'objet portable ou le système informatique a déterminé qu'un niveau maximum ou minimum de puissance est atteint ou dépassé.

11. Utilisation du système selon l'une quelconque des revendications 9 ou 10, au contrôle d'une distance dans laquelle on établit une communication entre deux dispositifs local (A) et distant (B), ladite distance (Dmax / Dmin) correspondant au niveau maximum et/ou minimum de puissance, **caractérisé en ce que** l'on déduit que l'une au moins des distances (Dmax / Dmin) est atteinte ou dépassée ou en voie de l'être quand un niveau maximum ou minimum de puissance atteint ou dépassé ou en voie de l'être est déterminé et signalé par un des dispositifs.
